# EUROPÄISCHE PATENTSCHRIFT

(11) **EP 2 926 917 B1**
(45) Veröffentlichungstag und Bekanntmachung des Hinweises auf die Patenterteilung: **06.12.2017**
(21) Anmeldenummer: 15162255.2
(22) Anmeldetag: 01.04.2015
(51) Int. Cl.: B08B 1/02

(54) **VORRICHTUNG UND VERFAHREN ZUM ZUMINDEST TEILWEISEN ABLÖSEN EINER FOLIE VON EINEM UMFORMERZEUGNIS**
DEVICE AND METHOD FOR AT LEAST PARTIALLY REMOVING A FILM FROM A REFORMED PRODUCT
DISPOSITIF ET PROCÉDÉ DE DÉCOLLEMENT AU MOINS PARTIEL D'UNE FEUILLE D'UN PRODUIT DE DÉFORMATION

(30) Priorität: 04.04.2014 DE 102014104812
(43) Veröffentlichungstag der Anmeldung: 07.10.2015
(73) Patentinhaber: BLANCO GmbH + Co KG, 75038 Oberderdingen (DE)
(72) Erfinder: Duss, Volker, 75438 Knittlingen (DE); Wolf, Bernd, 76356 Weingarten (DE)
(74) Vertreter: Hoeger, Stellrecht & Partner Patentanwälte mbB

(56) Entgegenhaltungen:
- EP-A1- 0 609 984
- DE-A1-102009 041 798
- DE-A1-102011 080 831
- DE-A1-102011 113 596
- DE-U1-202004 015 543

## Beschreibung

Die vorliegende Erfindung betrifft eine Vorrichtung zum zumindest teilweisen Ablösen einer Folie von einem Umformerzeugnis.

Umformerzeugnisse, beispielsweise durch Tiefziehen hergestellte Spülen, können mit einer schützenden Folie versehen sein, die eine Beschädigung der Oberfläche des Umformerzeugnisses während des Umformvorgangs, beispielsweise ein Verkratzen, verhindert, vorzugsweise an einer Sichtseite des Umformerzeugnisses, die bei der späteren Benutzung des Umformerzeugnisses dem Benutzer zugewandt ist.

Vor einer Weiterbearbeitung oder Verpackung des Umformerzeugnisses muss diese Folie entfernt werden.

Es ist bekannt, eine solche Folie mittels eines Druckluftstrahls von dem Umformerzeugnis abzulösen, wobei eine den Druckluftstrahl erzeugende Druckluftdüse von einer Bedienungsperson in der Hand gehalten und relativ zu dem Umformerzeugnis bewegt wird.

Die Ablösung der Folie mittels einer von einer Bedienungsperson händisch geführten Druckluftdüse ist zeitaufwändig und erfordert eine hohe Erfahrung und Fertigkeit bei der betreffenden Bedienungsperson.

Die EP 0 609 984 A1 offenbart eine Vorrichtung zum Ablösen einer Folie von einem flachen Erzeugnis, wobei die Vorrichtung eine Einwirkungsvorrichtung zum Anlösen und Ablösen der Folie und eine Bewegungsvorrichtung zum Bewegen der Einwirkungsvorrichtung relativ zu dem flachen Erzeugnis umfasst.

Die DE 10 2009 041 798 A1 offenbart eine Vorrichtung zum Ablösen eines Etiketts von einem Behälter, wobei die Vorrichtung eine Einwirkungsvorrichtung zum Anlösen und Ablösen des Etiketts und eine Bewegungsvorrichtung zum Bewegen der Einwirkungsvorrichtung relativ zu dem Behälter und eine weitere Bewegungsvorrichtung zum Bewegen des Behälters relativ zu der Einwirkungsvorrichtung umfasst. Dabei umfasst die Einwirkungsvorrichtung aus dieser Druckschrift zwei Fluidstrahlerzeugungsvorrichtungen, wobei die Fluidstrahlen, die von den Fluidstrahlerzeugungsvorrichtungen erzeugt werden, zeitlich nacheinander auf einen Abschnitt des um eine Drehachse gedrehten Behälters einwirken.

Die DE 20 2004 015 543 U1 offenbart eine Vorrichtung zum Ablösen von Haftkleber-Etiketten von Gegenständen, wobei die Vorrichtung eine Einwirkungsvorrichtung zum Anlösen und Ablösen der Etiketten und eine Bewegungsvorrichtung zum Bewegen der Gegenstände mit den Etiketten relativ zu der Einwirkungsvorrichtung und eine weitere Bewegungsvorrichtung zum Bewegen der Einwirkungsvorrichtung relativ zu den Gegenständen mit den Etiketten umfasst. Dabei umfasst die Einwirkungsvorrichtung aus dieser Druckschrift vier Fluidstrahlerzeugungsvorrichtungen, wobei die Fluidstrahlen, die von den Fluidstrahlerzeugungsvorrichtungen erzeugt werden, zeitlich nacheinander auf einen Abschnitt des jeweils abgeblasenen Gegenstandes einwirken.

Der vorliegenden Erfindung liegt die Aufgabe zugrunde, eine Vorrichtung der eingangs genannten Art zu schaffen, mittels welcher die Folie rasch und zuverlässig und vorzugsweise automatisch von dem Umformerzeugnis entfernbar ist.

Diese Aufgabe wird durch eine Vorrichtung nach Anspruch 1 gelöst.

Der vorliegenden Erfindung liegt das Konzept zugrunde, mindestens eine Einwirkungsvorrichtung zum Anlösen und/oder Ablösen der Folie von dem Umformerzeugnis mittels einer Bewegungsvorrichtung so relativ zu dem Umformerzeugnis zu bewegen, dass eine optimale Einwirkung der Einwirkungsvorrichtung auf die an dem Umformerzeugnis angeordnete Folie ermöglicht wird, ohne dass es hierfür des Eingreifens einer Bedienungsperson bedarf.

Dabei ist die Vorrichtung vorzugsweise so ausgebildet, dass die Folie nicht in einzelne Folienteile getrennt, insbesondere zerschnitten, wird.

Ferner ist die Vorrichtung vorzugsweise so ausgebildet, dass die mindestens eine Einwirkungsvorrichtung die Folie nicht durchdringt, insbesondere nicht durchsticht.

Bevorzugt ist vorgesehen, dass die mindestens eine Einwirkungsvorrichtung von der dem Umformerzeugnis abgewandten Seite der Folie her, insbesondere nur von der dem Umformerzeugnis abgewandten Seite der Folie her, auf die Folie einwirkt und/oder auf einen Randbereich, insbesondere einen Folienrand, der Folie einwirkt.

Das Umformerzeugnis kann einstückig ausgebildet sein oder aus mehreren Elementen zusammengesetzt sein, beispielsweise durch Verschweißung, wobei mindestens eines dieser Elemente einem Umformvorgang unterzogen worden ist.

Vorzugsweise umfasst die Vorrichtung, die im Folgenden kurz als Ablösevorrichtung bezeichnet wird, eine Steuer- oder Regelvorrichtung zum automatischen Steuern oder Regeln der mindestens einen Einwirkungsvorrichtung und/oder der mindestens einen Bewegungsvorrichtung.

Mindestens eine Einwirkungsvorrichtung kann als eine Anlöseeinheit ausgebildet sein, durch deren Einwirkung die Folie angelöst wird, das heißt die Haftung zwischen der Folie und dem Umformerzeugnis wird lokal aufgehoben, so dass die Folie anschließend von dem Umformerzeugnis abgelöst werden kann.

Ferner kann mindestens eine Einwirkungsvorrichtung als Ablöseeinheit ausgebildet sein, durch deren Einwirkung auf die Folie, insbesondere nach einer vorausgegangenen Anlösung der Folie, die Folie von dem Umformerzeugnis abgehoben werden kann.

Bei einer Ausgestaltung der Erfindung ist vorgesehen, dass mindestens eine Einwirkungsvorrichtung ein schwingendes und/oder rotierendes Kontaktanlöseelement umfasst. Das Kontaktanlöseelement bewirkt durch mechanischen Kontakt mit der Folie ein Anlösen der Folie, das heißt eine lokale Aufhebung der Haftung zwischen der Folie und dem Umformerzeugnis.

Mittels des Kontaktanlöseelements ist ein Anlösen der Folie durch mechanischen Kontakt des Kontaktanlöseelements mit der Folie bewirkbar.

Vorzugsweise ist das Kontaktanlöseelement so ausgebildet, dass es die Folie nicht durchdringt, insbesondere nicht durchschneidet oder durchsticht.

Ein solches Kontaktanlöseelement ist vorzugsweise Bestandteil einer Anlöseeinheit der Ablösevorrichtung.

Ferner ist bei dieser Ausgestaltung der Erfindung vorgesehen, dass mindestens eine Einwirkungsvorrichtung eine Bürste umfasst.

Eine solche Bürste kann Bürstenborsten umfassen, welche vorzugsweise um eine Rotationsachse der Bürste rotieren und dabei in Kontakt mit der Folie kommen.

Der Anstellwinkel der Bürste relativ zu der Oberfläche des Umformerzeugnisses, an welcher die Folie angeordnet ist, die Umdrehungszahl der rotierenden Bürste und/oder der Durchmesser der Bürste werden in Abhängigkeit von der Geometrie des Umformerzeugnisses so gewählt, dass ein optimaler Anlöseeffekt erzielt wird.

Mindestens eine Einwirkungsvorrichtung kann mehrere Bürsten umfassen, welche sich vorzugsweise hinsichtlich mindestens eines der genannten Parameter, beispielsweise des Anstellwinkels, der Umdrehungszahl und/oder des Durchmessers, voneinander unterscheiden.

Alternativ oder ergänzend zum Vorhandensein einer oder mehrerer Rollen und/oder einer oder mehrerer Bürsten in der Einwirkungsvorrichtung kann vorgesehen sein, dass mindestens eine Einwirkungsvorrichtung zwei oder mehr Fluidstrahlerzeugungsvorrichtungen umfasst, mittels welcher jeweils ein die Folie und/oder das Umformerzeugnis beaufschlagender Fluidstrahl erzeugbar ist.

Vorzugsweise ist die Fluidstrahlerzeugungsvorrichtung so ausgebildet, dass der damit erzeugte Fluidstrahl die dem Umformerzeugnis abgewandte Seite der Folie, besonders bevorzugt nur die dem Umformerzeugnis abgewandte Seite der Folie, und/oder einen Randbereich der Folie, insbesondere einen Folienrand, beaufschlagt.

Eine solche Fluidstrahlerzeugungsvorrichtung kann insbesondere eine Fluiddüse, beispielsweise eine Druckluftdüse, umfassen, welche an eine Druckfluidquelle, beispielsweise eine Druckluftquelle, angeschlossen ist.

Besonders günstig ist es, wenn mindestens eine Einwirkungsvorrichtung drei oder mehr Fluidstrahlerzeugungsvorrichtungen (die beispielsweise eine oder mehrere Düsen umfassen) umfasst.

Durch eine Kombination mehrerer Fluidstrahlerzeugungsvorrichtungen wird ein besonders guter Ablöseeffekt erzielt.

Dabei wirken die Fluidstrahlen, die von den Fluidstrahlerzeugungsvorrichtungen einer Einwirkungsvorrichtung erzeugt werden, zeitlich nacheinander auf einen Abschnitt des Umformerzeugnisses ein.

Wenn das Umformerzeugnis einen (von der Einwirkungsvorrichtung aus gesehen) konkav gekrümmten Bereich aufweist, so ist eine Einwirkungsvorrichtung mit mehreren Fluidstrahlerzeugungsvorrichtungen vorzugsweise so ausgebildet, dass ein den konkav gekrümmten Bereich beaufschlagender Fluidstrahl auf das Umformerzeugnis einwirkt, bevor ein dem konkav gekrümmten Bereich benachbarter Bereich des Umformerzeugnisses von einem weiteren Fluidstrahl, der von einer anderen Fluidstrahlerzeugungsvorrichtung der Einwirkungsvorrichtung erzeugt wird, beaufschlagt wird.

Die Anzahl der Fluidstrahlerzeugungsvorrichtungen, der Anstellwinkel der von ihnen erzeugten Fluidstrahlen, die Strahlweite der erzeugten Fluidstrahlen, der Druck des Fluids in den erzeugten Fluidstrahlen und/oder der Volumenstrom des Fluids in den erzeugten Fluidstrahlen werden in Abhängigkeit von der Geometrie des jeweiligen Umformerzeugnisses so gewählt, dass ein möglichst guter Ablöseeffekt erzielt wird.

Wenn eine Einwirkungsvorrichtung mehrere Fluidstrahlerzeugungsvorrichtungen umfasst, so ist es günstig, wenn die Einwirkungsbereiche von mindestens zwei Fluidstrahlerzeugungsvorrichtungen relativ zueinander versetzt angeordnet sind.

Dabei können die Einwirkungsbereiche der mindestens zwei Fluidstrahlerzeugungsvorrichtungen einander teilweise überlappen oder völlig voneinander getrennt sein.

Insbesondere dann, wenn das Umformerzeugnis, beispielsweise eine Spüle, keinen Haltewinkel aufweist, kann es genügen, in der Einwirkungsvorrichtung nur eine oder mehrere Fluidstrahlerzeugungsvorrichtungen, aber keine Rolle oder Bürste vorzusehen.

Besonders günstig ist es, wenn die Ablösevorrichtung eine erste Einwirkungsvorrichtung und eine zweite Einwirkungsvorrichtung umfasst, welche im Betrieb der Vorrichtung nacheinander auf denselben Abschnitt eines Randbereichs des Umformerzeugnisses einwirken.

Dabei kann insbesondere die erste Einwirkungsvorrichtung als eine Anlöseeinheit und die zweite Einwirkungsvorrichtung als eine Ablöseeinheit ausgebildet sein.

Bei einer bevorzugten Ausgestaltung der Erfindung ist vorgesehen, dass die erste Einwirkungsvorrichtung ein schwingendes und/oder rotierendes Kontaktanlöseelement, beispielsweise eine Rolle und/oder eine Bürste, umfasst und die zweite Einwirkungsvorrichtung mindestens eine, vorzugsweise mehrere, Fluidstrahlerzeugungsvorrichtungen umfasst.

Vorzugsweise ist die erste Einwirkungsvorrichtung in einer Vorschubrichtung vor der zweiten Einwirkungsvorrichtung angeordnet, so dass die erste Einwirkungsvorrichtung zuerst auf einen Abschnitt eines Randbereichs des Umformerzeugnisses einwirkt und die zweite Einwirkungsvorrichtung danach auf denselben Abschnitt des Randbereichs des Umformerzeugnisses einwirkt.

Der apparative Aufwand für die Ablösevorrichtung wird gering gehalten, wenn die Vorrichtung eine Bewegungsvorrichtung umfasst, mittels welcher die erste Einwirkungsvorrichtung und die zweite Einwirkungsvorrichtung in einem vorgegebenen Abstand voneinander relativ zu dem Umformerzeugnis bewegbar sind.

Eine besonders hohe Flexibilität der Ablösevorrichtung und des damit durchgeführten Ablöseverfahrens wird erzielt, wenn die Vorrichtung für die erste Einwirkungsvorrichtung und für die zweite Einwirkungsvorrichtung separate Bewegungsvorrichtungen umfasst, so dass die erste Einwirkungsvorrichtung und die zweite Einwirkungsvorrichtung unabhängig voneinander relativ zu dem Umformerzeugnis bewegbar sind.

Jede Einwirkungsvorrichtung wird mittels einer zugeordneten Bewegungsvorrichtung vorzugsweise so relativ zu dem Umformerzeugnis bewegt, dass die Einwirkungsvorrichtung einer Randkontur des Umformerzeugnisses folgt.

Um zu erreichen, dass eine Einwirkungsvorrichtung auch dann genau auf einen bestimmten Bereich des Umformerzeugnisses einwirkt, wenn die Position dieses bestimmten Bereichs des Umformerzeugnisses relativ zu der Bewegungsvorrichtung, beispielsweise aufgrund von Fertigungstoleranzen, variiert, ist es von Vorteil, wenn die Vorrichtung eine Führungseinrichtung zum Führen der betreffenden Einwirkungsvorrichtung an einer Führungskontur des Umformerzeugnisses selbst umfasst.

Eine solche Führungseinrichtung kann insbesondere ein Führungselement und ein Vorspannelement zum Vorspannen des Führungselements gegen die Führungskontur des Umformerzeugnisses umfassen.

Grundsätzlich könnte die zumindest teilweise abgelöste Folie nach dem Durchlaufen der Ablösevorrichtung manuell von einer Bedienungsperson vollständig von dem Umformerzeugnis abgezogen werden.

Ein weiterer Zeitgewinn ergibt sich jedoch, wenn die Vorrichtung eine, vorzugsweise automatisch arbeitende, Abziehvorrichtung zum Abziehen der abgelösten Folie von dem Umformerzeugnis umfasst.

Eine solche Abziehvorrichtung kann beispielsweise einen Greifer umfassen, welcher einen von dem Umformerzeugnis abgelösten Bereich der Folie ergreift und durch eine Bewegung relativ zu dem Umformerzeugnis den Rest der Folie von dem Umformerzeugnis abzieht.

Bei einer bevorzugten Ausgestaltung der Erfindung ist vorgesehen, dass die Abziehvorrichtung mindestens ein Abziehband umfasst.

Das Abziehband kann insbesondere eine Umlaufbewegung ausführen und dabei einen vom Umformerzeugnis abgelösten Bereich der Folie von dem Um-formerzeugnis weg bewegen.

Insbesondere kann vorgesehen sein, dass die Abziehvorrichtung ein Doppel-Abziehband umfasst, welches mindestens zwei Abziehbänder aufweist, zwischen denen ein Bereich der von dem Umformerzeugnis abgelösten Folie einklemmbar ist.

Zwei Abziehbänder einer solchen Vorrichtung können einen Eintrittspalt oder Abziehspalt begrenzen. Sobald ein Rand der von dem Umformerzeugnis abgelösten Folie in einen solchen Spalt gelangt, wird der Rest der Folie von dem Umformerzeugnis abgezogen.

Um einen Rand der von dem Umformerzeugnis abgelösten Folie in einen solchen Spalt einzubringen, kann vorgesehen sein, dass die Ablösevorrichtung eine Anblasvorrichtung umfasst, die eine oder mehrere Fluidstrahlerzeugungsvorrichtungen umfasst, mittels welchen Fluidstrahlen erzeugbar sind, die einen Rand der abgelösten Folie in den Spalt bewegen.

Alternativ oder ergänzend hierzu kann auch vorgesehen sein, dass die Ablösevorrichtung eine Ansaugvorrichtung umfasst, mittels welcher ein Unterdruck erzeugbar ist, durch den ein Rand der abgelösten Folie in den Spalt gezogen wird.

Die vorliegende Erfindung betrifft ferner ein Verfahren zum zumindest teilweisen Ablösen einer Folie von einem Umformerzeugnis.

Der vorliegenden Erfindung liegt die weitere Aufgabe zugrunde, ein solches Verfahren zu schaffen, welches mit geringem Zeitaufwand und zuverlässig durchführbar ist und vorzugsweise automatisch, ohne Eingreifen einer Bedienungsperson, abläuft.

Diese Aufgabe wird erfindungsgemäß durch ein Verfahren zum zumindest teilweisen Ablösen einer Folie von einem Umformerzeugnis nach Anspruch 12 gelöst.

Wenn das Umformerzeugnis einen umlaufenden Randbereich aufweist, so ist vorzugsweise vorgesehen, dass die mindestens eine Einwirkungsvorrichtung über im Wesentlichen die gesamte Länge des Randbereichs hinweg auf die an dem Umformerzeugnis angeordnete Folie einwirkt.

Alternativ hierzu kann aber auch vorgesehen sein, dass mindestens eine Einwirkungsvorrichtung nur längs eines Teils der gesamten Länge des Randbereichs auf die an dem Umformerzeugnis angeordnete Folie einwirkt.

Beispielsweise kann vorgesehen sein, dass mindestens eine Einwirkungsvorrichtung nur längs eines stirnseitigen Abschnitts des Randbereichs des Umformerzeugnisses auf die an dem Umformerzeugnis angeordnete Folie einwirkt.

In diesem Fall wird die Folie nur in diesem Teilabschnitt des Randbereichs des Umformerzeugnisses angelöst und/oder von dem Umformerzeugnis abgelöst.

Das Abziehen der übrigen Folie von den anderen Bereichen des Umformerzeugnisses erfolgt dann manuell oder mittels einer Abziehvorrichtung, wie sie vorstehend beschrieben worden ist.

Grundsätzlich ist es möglich, die Folie nur durch Verwendung einer rotierenden Bürste von dem Umformerzeugnis abzulösen.

Ebenso ist es grundsätzlich möglich, die Folie nur unter Verwendung einer Fluidstrahlerzeugungsvorrichtung, insbesondere einer Druckluftdüse, von dem Umformerzeugnis abzulösen.

Eine besonders gute Ablösewirkung wird jedoch erzielt, wenn die Ablösevorrichtung eine rotierende Bürste zum Anlösen und/oder Ablösen der Folie von dem Umformerzeugnis und mindestens eine Fluidstrahlerzeugungsvorrichtung, insbesondere mindestens eine Druckluftdüse, zum Ablösen der Folie von dem Umformerzeugnis umfasst, wobei die Bürste und die Fluidstrahlerzeugungsvorrichtung mittels derselben Bewegungsvorrichtung oder mittels zweier verschiedener Bewegungsvorrichtungen so bewegt werden, dass zuerst die Bürste und dann der Fluidstrahl auf denselben Abschnitt eines Randbereichs des Umformerzeugnisses einwirken.

Die erfindungsgemäße Vorrichtung und das erfindungsgemäße Verfahren eignen sich grundsätzlich zum zumindest teilweisen Ablösen einer Folie von einem beliebig gestalteten Umformerzeugnis.

Besonders geeignet sind die erfindungsgemäße Vorrichtung und das erfindungsgemäße Verfahren zum zumindest teilweisen Ablösen einer Folie von einem Umformerzeugnis und/oder von einer Spüle oder einem Spülbecken, die insbesondere durch Tiefziehen oder auch durch Verschweißen mehrerer Elemente hergestellt sein können.

Die erfindungsgemäße Vorrichtung eignet sich insbesondere zur Durchführung des erfindungsgemäßen Verfahrens.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: eine schematische perspektivische Darstellung einer Vorrichtung zum Ablösen einer Folie von einem Umformerzeugnis, welche eine Aufgabestation, eine Ablösestation, eine Entnahmestation und eine Folien-Abziehvorrichtung umfasst;
- Fig. 2: eine Draufsicht von oben auf die Ablösevorrichtung aus Fig. 1;
- Fig. 3: eine schematische Seitenansicht der Ablösevorrichtung in einer Phase eines Ablöseverfahrens, in welcher das Umformerzeugnis mit der abzulösenden Folie in der Aufgabestation angeordnet ist;
- Fig. 4: eine der Fig. 3 entsprechende Darstellung der Ablösevorrichtung in einer Phase, in welcher das Umformerzeugnis mit der abzulösenden Folie in der Ablösestation angeordnet ist und eine Anlösevorrichtung und eine Ablösevorrichtung auf die Folie in einem Randbereich des Umformerzeugnisses einwirken;
- Fig. 5: eine den Fig. 3 und 4 entsprechende Darstellung der Ablösevorrichtung in einer Phase, in welcher das Umformerzeugnis mit der zumindest teilweise abgelösten Folie von der Ablösestation zu der Entnahmestation transportiert wird und ein Rand der abgelösten Folie mittels einer Anblasvorrichtung in einen Eintrittspalt einer Abziehvorrichtung eingebracht wird;
- Fig. 6: eine den Fig. 3 bis 5 entsprechende Darstellung der Ablösevorrichtung in einer Phase, in welcher das Umformerzeugnis mit der abgelösten Folie von der Ablösestation zu der Entnahmestation transportiert wird und die abgelöste Folie mittels der Abziehvorrichtung von dem Umformerzeugnis abgezogen wird;
- Fig. 7: eine den Fig. 3 bis 6 entsprechende Darstellung der Ablösevorrichtung in einer Phase, in welcher das Umformerzeugnis ohne die abgelöste Folie in der Entnahmestation angeordnet ist und die abgelöste Folie in einen Auffangbehälter transportiert wird;
- Fig. 8: eine perspektivische Darstellung eines Ausschnitts eines Randbereichs des Umformerzeugnisses mit einer Anlösevorrichtung, welche ein rotierendes Kontaktanlöseelement umfasst, und mit einer Ablösevorrichtung, welche mehrere Fluidstrahlerzeugungsvorrichtungen umfasst;
- Fig. 9: einen schematischen Querschnitt durch den Randbereich des Umformerzeugnisses aus Fig. 8, mit Darstellung des rotierenden Kontaktanlöseelements und von zwei der Fluidstrahlerzeugungsvorrichtungen;
- Fig. 10: eine schematische perspektivische Darstellung eines Randbereichs des Umformerzeugnisses mit einer alternativen Ausführungsform der Anlösevorrichtung und der Ablösevorrichtung;
- Fig. 11: einen schematischen Querschnitt durch den Randbereich des Umformerzeugnisses aus Fig. 10, mit Darstellung eines rotierenden Kontaktanlöseelements der Anlösevorrichtung und von zwei Fluidstrahlerzeugungsvorrichtungen der Ablösevorrichtung;
- Fig. 12: eine schematische perspektivische Darstellung eines Randbereichs einer zweiten Ausführungsform des Umformerzeugnisses, mit einer Anlösevorrichtung, welche ein rotierendes Kontaktanlöseelement umfasst, und mit einer Ablösevorrichtung, welche mehrere Fluidstrahlerzeugungsvorrichtungen umfasst;
- Fig. 13: einen schematischen Querschnitt durch den Randbereich des Umformerzeugnisses aus Fig. 12, unter Darstellung des Kontaktanlöseelements und der Fluidstrahlerzeugungsvorrichtungen;
- Fig. 14: eine schematische Draufsicht auf einen Randbereich eines Umformerzeugnisses und eine Einwirkungsvorrichtung zum Anlösen und/oder Ablösen der Folie von dem Umformerzeugnis, wobei die Einwirkungsvorrichtung mittels einer Führungseinrichtung entlang einer Führungskontur des Umformerzeugnisses geführt ist; und
- Fig. 15: eine schematische perspektivische Darstellung des Randbereiches des Umformerzeugnisses, der Einwirkungsvorrichtung und der Führungseinrichtung aus Fig. 14.

Gleiche oder funktional äquivalente Elemente sind in allen Figuren mit denselben Bezugszeichen bezeichnet.

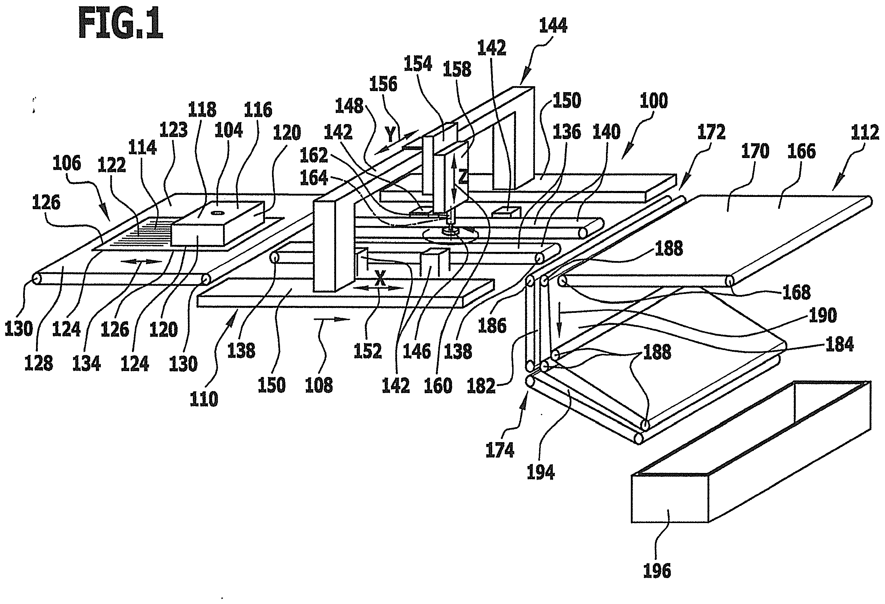

Eine in den Fig. 1 bis 7 dargestellte, als Ganzes mit 100 bezeichnete Vorrichtung zum Ablösen einer Folie 102 von einem Umformerzeugnis 104, im Folgenden kurz Ablösevorrichtung genannt, umfasst eine Aufgabestation 106, in welche ein Umformerzeugnis 104 mit der daran angeordneten Folie 102 von einer der Ablösevorrichtung 100 vorgeschalteten Fertigungsvorrichtung, insbesondere einer Umformvorrichtung, einbringbar ist, eine sich in einer Förderrichtung 108 an die Aufgabestation 106 anschließende Ablösestation 110, in welcher die Folie 102 automatisch von dem Umformerzeugnis 104 ablösbar ist, und eine sich in der Förderrichtung 108 an die Ablösestation 110 anschließende Entnahmestation 112, aus welcher das von der Folie 102 befreite Umformerzeugnis 104 für eine weitere Bearbeitung in einer der Ablösevorrichtung 100 nachgeschalteten Bearbeitungsvorrichtung oder zum Verpacken des Umformerzeugnisses 104 entnehmbar ist.

Das Umformerzeugnis 104 ist im dargestellten Ausführungsbeispiel als eine Spüle 114 ausgebildet, welche beispielsweise ein Becken 116 mit einem Beckenboden 118 und seitlichen Beckenwänden 120, eine seitlich neben dem Becken 116 angeordnete Abtropffläche 122 und einen um das Becken 116 und die Abtropffläche 122 ringförmig umlaufenden Randbereich 124 umfasst.

Das Umformerzeugnis 104 wird durch einen Umformvorgang, beispielsweise einen Tiefziehvorgang, aus einem im Wesentlichen ebenen Ausgangsmaterial, beispielsweise aus einem Blechband oder einer Blechtafel, gebildet.

Vor dem Umformvorgang wird das Ausgangsmaterial an derjenigen Seite, welche der späteren Sichtseite 204 des Umformerzeugnisses entspricht, im Falle einer Spüle 114 also an der dem Benutzer der Spüle 114 im Betrieb derselben zugewandten Oberseite der Spüle 114, mit der Folie 102 versehen, um eine Beschädigung der Oberfläche des Umformerzeugnisses 104, beispielsweise ein Verkratzen, während des Umformvorgangs zu verhindern.

Nach dem Umformvorgang erstreckt sich die Folie 102 um den äußeren Rand 126 des Umformerzeugnisses 104 herum bis in die der Sichtseite 204 abgewandte Rückseite des Randbereichs 124 des Umformerzeugnisses 104 hinein.

Vor einer Weiterbearbeitung des Umformerzeugnisses 104 oder einer Verpackung des Umformerzeugnisses 104 für den Versand muss die Folie 102 von dem Umformerzeugnis 104 entfernt werden, was mittels der Ablösevorrichtung 100 erfolgt.

Die Aufgabestation 106 der Ablösevorrichtung 100 umfasst ein Transportband 128, welches über Umlenkrollen 130 geführt ist, von denen mindestens eine zu einer Drehbewegung antreibbar ist, um das Transportband 128 in der Förderrichtung 108 zu bewegen.

Eine Oberseite des Transportbands 128 bildet eine Auflagefläche 132, auf welche das Umformerzeugnis 104, das mit der Folie 102 versehen ist, mit der Sichtseite 204 nach unten auflegbar ist.

Dabei wird das Umformerzeugnis 104 vorzugsweise so auf das Transportband 128 aufgelegt, dass eine Längsrichtung 134 des Umformerzeugnisses 104 im Wesentlichen parallel zu der Förderrichtung 108 der Ablösevorrichtung 100 ausgerichtet ist.

Die sich an die Aufgabestation 106 anschließende Ablösestation 110 umfasst ein oder mehrere Transportbänder 136, die um Umlenkrollen 138 geführt sind, von denen jeweils mindestens eine zu einer Drehbewegung antreibbar ist, um das jeweilige Transportband 136 in der Förderrichtung 108 zu bewegen.

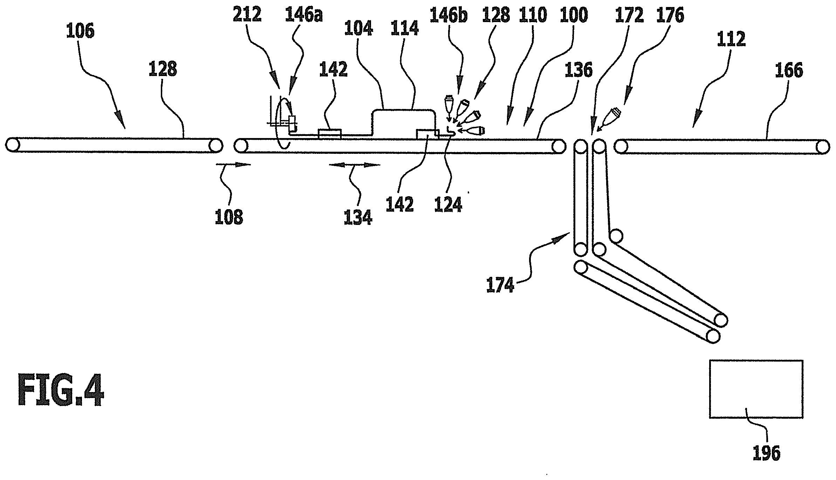

Die Oberseiten der Transportbänder 136 bilden Auflageflächen 140 für das Umformerzeugnis 104, welches durch die Transportbänder 136 der Ablösestation 110 von dem Transportband 128 der Aufgabestation 106 übernehmbar und in eine (in Fig. 4 dargestellte) Arbeitsposition innerhalb der Ablösestation 110 transportierbar ist.

Um das Umformerzeugnis 104 in der Arbeitsposition zentrieren zu können, kann die Ablösestation 110 mit einem oder mehreren Positionierelementen 142 versehen sein.

Ferner umfasst die Ablösestation 110 mindestens eine Bewegungsvorrichtung 144 zum Bewegen mindestens einer Einwirkungsvorrichtung 146 zum Anlösen und/oder Ablösen der Folie 102 relativ zu dem Umformerzeugnis 104.

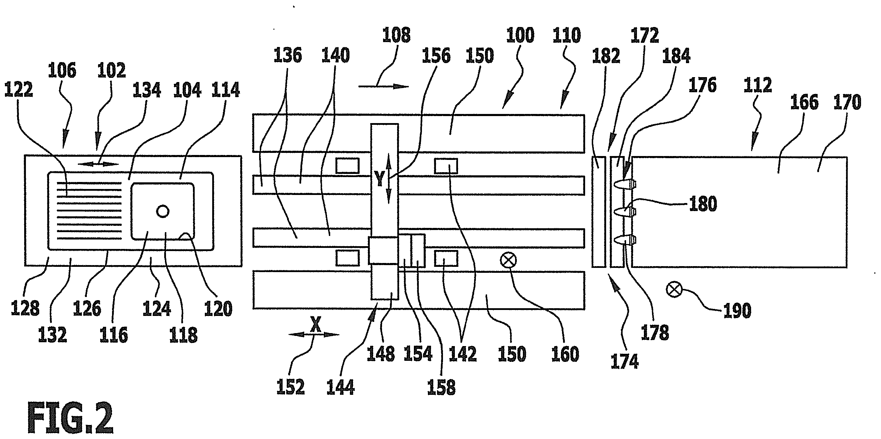

Die in den Fig. 1 und 2 beispielhaft dargestellte Bewegungsvorrichtung 144 umfasst beispielsweise ein X-Portal 148, welches längs zweier X-Führungen 150 durch einen (nicht dargestellten) X-Antrieb längs einer X-Richtung 152 verfahrbar ist.

Dabei ist die X-Richtung 152 vorzugsweise horizontal und vorzugsweise im Wesentlichen parallel zu der Förderrichtung 108 der Ablösevorrichtung 100 ausgerichtet.

An dem X-Portal 148 ist ein Y-Schlitten 154 so gehalten, dass er längs des X-Portals 148 in einer Y-Richtung 156, welche vorzugsweise im Wesentlichen horizontal und vorzugsweise im Wesentlichen senkrecht zur X-Richtung 152 ausgerichtet ist, mittels eines (nicht dargestellten) Y-Antriebs verfahrbar ist.

An dem Y-Schlitten 154 ist ein Z-Schlitten 158 so gehalten, dass er längs des Y-Schlittens 154 in einer Z-Richtung 160, welche vorzugsweise im Wesentlichen vertikal, vorzugsweise im Wesentlichen senkrecht zur Y-Richtung 156 und vorzugsweise im Wesentlichen senkrecht zur X-Richtung 152 ausgerichtet ist, mittels eines (nicht dargestellten) Z-Antriebs verfahrbar ist.

Der Z-Schlitten 158 trägt, vorzugsweise an einem unteren Ende desselben, eine Z-Spindel 162, welche um eine vorzugsweise im Wesentlichen parallel zur Z-Richtung 160 ausgerichtete Z-Achse 164 mittels eines (nicht dargestellten) Z-Drehantriebs drehbar ist.

Die Z-Spindel 162 wiederum trägt mindestens eine, in Fig. 1 rein schematisch dargestellte Einwirkungsvorrichtung 146.

Die Einwirkungsvorrichtung 146 ist somit mittels der Bewegungsvorrichtung 144 längs dreier Freiheitsgrade (X-Richtung 152, Y-Richtung 156 und Z-Richtung 160) linear relativ zu dem Umformerzeugnis 104 bewegbar und um die Z-Achse 164 relativ zu dem Umformerzeugnis 104 drehbar.

Die Drehachse der Spindel kann, abhängig von der Randkontur des Umformerzeugnisses 104, auch gegenüber der Z-Achse 164 und/oder gegenüber der Vertikalen geneigt sein.

Wenn die Ablösestation 110 mehr als eine Einwirkungsvorrichtung 146 umfasst, so können zwei oder mehr dieser Einwirkungsvorrichtungen 146 mittels derselben Bewegungsvorrichtung 144 relativ zu dem Umformerzeugnis 104 bewegt werden.

In diesem Fall ist der Abstand zwischen den Einwirkungsvorrichtungen 146, welche durch dieselbe Bewegungsvorrichtung 144 bewegt werden, während des Ablösevorgangs konstant.

Alternativ oder ergänzend hierzu kann auch vorgesehen sein, dass die Ablösestation 110 mindestens zwei Bewegungsvorrichtungen 144 umfasst, durch welche mindestens zwei verschiedene, aber vorzugsweise im Wesentlichen gleich aufgebaute, Einwirkungsvorrichtungen 146 unabhängig voneinander relativ zu dem Umformerzeugnis 104 bewegbar sind.

Dabei können mehrere Einwirkungsvorrichtungen jeweils mindestens eine Bürste und mindestens eine Düse umfassen. Ferner kann vorgesehen sein, dass mindestens eine Einwirkungsvorrichtung 146 mindestens eine Bürste, aber keine Düse, und mindestens eine andere Einwirkungsvorrichtung 146 mindestens eine Düse, aber keine Bürste umfasst.

Bei Vorhandensein mehrerer Einwirkungsvorrichtungen 146 kann der Abstand zwischen den Einwirkungsvorrichtungen 146, welche von verschiedenen Bewegungsvorrichtungen 144 relativ zu dem Umformerzeugnis 104 bewegt werden, während des Ablösevorgangs variieren.

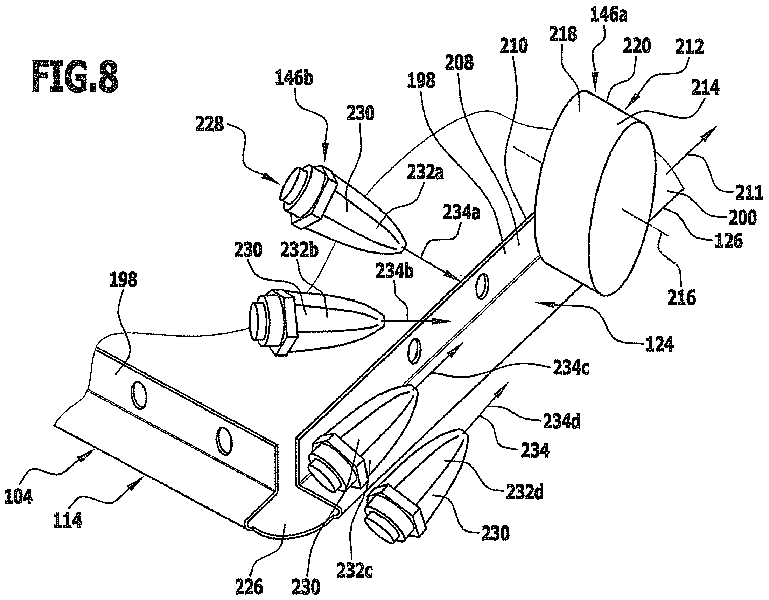

Details verschiedener Ausführungsformen von Einwirkungsvorrichtungen 146 werden nachstehend unter Bezugnahme auf die Fig. 8 bis 15 erläutert werden.

Die in der Förderrichtung 108 auf die Ablösestation 110 folgende Entnahmestation 112 der Ablösevorrichtung 100 umfasst ein Transportband 166, das über Umlenkrollen 168 geführt ist, von denen mindestens eine zu einer Drehbewegung antreibbar ist, so dass das Transportband 166 in der Förderrichtung 108 bewegt werden kann.

Eine Oberseite des Transportbands 166 bildet eine Auflagefläche 170 für das Umformerzeugnis 104, auf welche das Umformerzeugnis 104 durch Antreiben der Transportbänder 136 der Ablösestation 110 und des Transportbands der Entnahmestation 112 übernommen werden kann.

Mittels der mindestens einen Bewegungsvorrichtung 144 wird mindestens eine Einwirkungsvorrichtung 146 derart längs des Randbereiches 124 des Umformerzeugnisses 104 bewegt, dass die mindestens eine Einwirkungsvorrichtung 146 die Folie 102 auf der Rückseite des Randbereichs 124 des Umformerzeugnisses 104 anlöst und zumindest teilweise ablöst.

Um die zumindest teilweise von dem Umformerzeugnis 104 abgelöste Folie 102 vollständig von dem Umformerzeugnis 104 abziehen zu können, ist im Bereich zwischen der Ablösestation 110 und der Entnahmestation 112 ein Eintrittsspalt 172 einer Abziehvorrichtung 174 angeordnet.

Wie aus den Fig. 2 bis 7 zu ersehen ist, ist der Abziehvorrichtung 174 eine Anblasvorrichtung 176 zugeordnet, welche eine oder mehrere Fluidstrahlerzeugungsvorrichtungen 178, beispielsweise in Form von Druckluftdüsen 180, umfasst.

Die Fluidstrahlerzeugungsvorrichtungen 178 der Anblasvorrichtung 176 sind so ausgerichtet, dass die von einem vorderen stirnseitigen Rand des Umformerzeugnisses 104 abgelöste Folie 102 in den Eintrittsspalt 172 der Abziehvorrichtung 174 gelangt, wenn das Umformerzeugnis 104 mit der zumindest teilweise abgelösten Folie 102 von der Ablösestation 110 in Richtung auf die Entnahmestation 112 transportiert wird.

Der Eintrittsspalt 172 der Abziehvorrichtung 174 wird durch zwei Abziehbänder 182 und 184 begrenzt, welche zumindest in ihren den Eintrittsspalt 172 ausbildenden Eintrittsabschnitten vorzugsweise im Wesentlichen parallel zueinander ausgerichtet sind.

Die Abziehbänder 182 und 184 sind über Umlenkrollen 186 beziehungsweise 188 geführt, von denen jeweils mindestens eine zu einer Drehbewegung antreibbar ist, um die Eintrittsabschnitte der Abziehbänder 182 und 184 in einer, vorzugsweise im Wesentlichen vertikal ausgerichteten, Abziehrichtung 190 anzutreiben.

Die einander zugewandten Oberflächen der Abziehbänder 182 und 184 bilden Klemmflächen 192, zwischen denen die abzuziehende Folie 102 geklemmt wird, so dass die Folie 102 längs der Abziehrichtung 190 in den Eintrittsspalt 172 hineingezogen und dabei zugleich von dem Umformerzeugnis 104, einschließlich der Sichtseite 204 des Umformerzeugnisses 104, im Wesentlichen vollständig abgezogen wird.

Mittels eines dem Eintrittsabschnitt des Abziehbandes 184 nachgeschalteten Transportabschnitts des Abziehbands 184 und mittels eines dem Abziehband 182 nachgeschalteten Transportbands 194 ist die von dem Umformerzeugnis 104 abgezogene Folie 102 in einen Auffangbehälter 196 transportierbar, welcher die Folie 102 aufnimmt.

Die in dem Auffangbehälter 196 gesammelten Folien 102 können einer Wiederverwertung oder einer Entsorgung zugeführt werden.

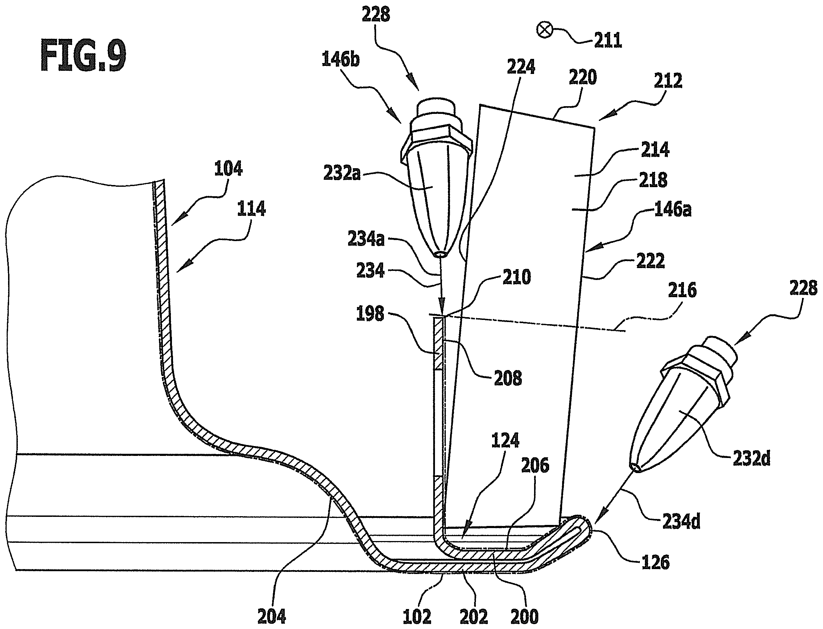

Ein erstes Ausführungsbeispiel für in der Ablösestation 110 der Ablösevorrichtung 100 verwendbare Einwirkungsvorrichtungen 146 ist in den Fig. 8 und 9 dargestellt.

Bei diesem Ausführungsbeispiel sind eine erste Einwirkungsvorrichtung 146a und eine zweite Einwirkungsvorrichtung 146b vorgesehen, wobei im Betrieb der Ablösestation 110 die erste Einwirkungsvorrichtung 146a der zweiten Einwirkungsvorrichtung 146b in einer Vorschubrichtung 211 vorausläuft, so dass auf jeden Abschnitt der an der Rückseite des Randbereichs 124 des Umformerzeugnisses 104 angeordneten Folie 102 zuerst die erste Einwirkungsvorrichtung 146a und dann die zweite Einwirkungsvorrichtung 146b einwirkt.

Die erste Einwirkungsvorrichtung 146a und die zweite Einwirkungsvorrichtung 146b können beide an derselben Bewegungsvorrichtung 144 gehalten sein, welche beispielhaft vorstehend beschrieben worden ist. In diesem Fall werden die erste Einwirkungsvorrichtung 146a und die zweite Einwirkungsvorrichtung 146b von derselben Bewegungsvorrichtung 144 in konstantem Abstand voneinander relativ zum dem Umformerzeugnis 104 bewegt.

Alternativ hierzu kann auch vorgesehen sein, dass die erste Einwirkungsvorrichtung 146a an einer ersten Bewegungsvorrichtung und die zweite Einwirkungsvorrichtung 146b an einer zweiten Bewegungsvorrichtung gehalten ist, so dass die beiden Einwirkungsvorrichtungen 146a und 146b unabhängig voneinander, in variierendem Abstand und/oder mit unterschiedlichen Geschwindigkeiten, relativ zu dem Umformerzeugnis 104 bewegt werden können.

Die in den Fig. 8 und 9 dargestellten Einwirkungsvorrichtungen 146a, 146b eignen sich insbesondere zum Ablösen der Folie 102 von einem Umformerzeugnis 104, welches an seiner der Sichtseite 204 abgewandten Rückseite mit Halteleisten 198 versehen ist.

Wenn es sich bei dem Umformerzeugnis 104 um ein in einen Ausschnitt einer Arbeitsplatte einzusetzendes Einbauerzeugnis, beispielsweise eine Einbauspüle, handelt, so können die Halteleisten 198 dazu dienen, mit (nicht dargestellten) Haltevorrichtungen zusammenzuwirken, um das Einbauerzeugnis an der Arbeitsplatte zu fixieren.

Die Halteleisten 198 sind vorzugsweise von dem äußeren Rand 126 des Umformerzeugnisses 104 beabstandet und erstrecken sich vorzugsweise im Wesentlichen in vertikaler Richtung.

Die Halteleisten 198 können beispielsweise einstückig mit einem rückseitigen Randbereich 200 ausgebildet sein, welcher auf einen sichtseitigen Randbereich 202 des Umformerzeugnisses 104 zurückgebogen ist.

Vor der Durchführung des Ablösevorgangs in der Ablösestation 110 der Ablösevorrichtung 100 sind die Sichtseite 204, die dem sichtseitigen Randbereich 202 abgewandte Unterseite 206 des rückseitigen Randbereichs 200 und eine dem äußeren Rand 126 des Umformerzeugnisses 104 zugewandte Außenseite 208 der Halteleisten 198 bis zu einem freien Rand 210 der Halteleisten 198 mit der Folie 102 bedeckt, welche in Fig. 9 durch eine strichpunktierte Linie angedeutet ist (in Fig. 8 ist die Folie 102 aus Gründen der Übersichtlichkeit nicht dargestellt).

Zwischen zwei Halteleisten 198 angeordnete Eckbereiche 226 (siehe Fig. 8) der Rückseite des Umformerzeugnisses 104 sind nicht mit der Folie 102 bedeckt, wenn diese Eckbereiche 226 nicht umgeformt sind, und sind mit der Folie 102 bedeckt, wenn diese Eckbereiche 226 umgeformt sind.

Die erste Einwirkungsvorrichtung 146a ist als eine Anlöseeinheit 212 ausgebildet und umfasst vorzugsweise ein um eine Rotationsachse 216 rotierendes Kontaktanlöseelement 214, insbesondere in Form einer Bürste 218.

Von der Bürste 218 ist in den Fig. 8 und 9 nur die Außenkontur 220 der Gesamtheit der Bürstenborsten dargestellt, welche sich vorzugsweise im Wesentlichen radial zu der Rotationsachse 216 der Bürste 218 erstrecken.

Die Außenkontur 220 der Bürstenborsten kann im Wesentlichen zylindrisch oder, wie in den Fig. 8 und 9 dargestellt, konisch ausgebildet sein, wobei vorzugsweise vorgesehen ist, dass der Durchmesser der Außenkontur 220 sich längs der Rotationsachse 216 von einem im Betrieb der Ablösestation 110 näher am äußeren Rand 126 des Umformerzeugnisses 104 liegenden äußeren Ende 222 zu einem weiter entfernt von dem äußeren Rand 126 des Umformerzeugnisses 104 liegenden inneren Ende 224 der Bürste 218 hin vergrößert.

Wie aus Fig. 9 zu ersehen ist, ist die Bürste 218 im Betrieb der Ablösestation 110 vorzugsweise so relativ zu dem Umformerzeugnis 104 positioniert, dass der äußere Rand des inneren Endes 224 der Bürste 218 an der Außenseite 208 einer Halteleiste 198 anliegt und/oder der äußere Rand des äußeren Endes 222 der Bürste 218 in der Nähe des äußeren Randes 126 des Umformerzeugnisses 104 an dem rückseitigen Randbereich 200 des Umformerzeugnisses 104 anliegt.

Die Rotationsachse 216 der Bürste 118 ist bei dieser Ausführungsform vorzugsweise um einen kleinen spitzen Winkel, insbesondere um weniger als ungefähr 10°, gegenüber der Horizontalen geneigt.

Beim Ablösevorgang in der Ablösestation 110 wird die Anlöseeinheit 212 im Wesentlichen parallel zum äußeren Rand 126 und/oder im Wesentlichen parallel zu den Halteleisten 198 am Randbereich 124 des Umformerzeugnisses 104 entlang bewegt, wobei die rotierende Bürste 218 in Kontakt mit der an dem Umformerzeugnis 104 anhaftenden Folie 102 kommt.

Durch den Kontakt mit den Borsten der rotierenden Bürste 218 wird die Folie 102 im Kontaktbereich angelöst, das heißt die Haftung zwischen der Folie 102 und dem Umformerzeugnis 104 wird lokal aufgehoben, so dass die Folie 102 anschließend von dem Umformerzeugnis 104 abgelöst werden kann.

Die zweite Einwirkungsvorrichtung 146b ist bei dieser Ausführungsform als eine Ablöseeinheit 228 ausgebildet.

Die Ablöseeinheit 228 umfasst bei diesem Ausführungsbeispiel mehrere, beispielsweise vier, Fluidstrahlerzeugungsvorrichtungen 230, welche insbesondere als Fluiddüsen, vorzugsweise als Druckluftdüsen 232a bis 232d, ausgebildet sein können.

Die Druckluftdüsen 232a bis 232d sind vorzugsweise an einer (nicht dargestellten) gemeinsamen Halterung angeordnet, welche mittels der Bewegungsvorrichtung 144 relativ zu dem Umformerzeugnis 104 bewegt wird.

Die Druckluftdüsen 232a bis 232d sind so angeordnet und ausgerichtet, dass die von ihnen erzeugten Fluidstrahlen 234 an verschiedenen Stellen und aus verschiedenen Richtungen auf den Randbereich 124 des Umformerzeugnisses 104 auftreffen.

So kann insbesondere vorgesehen sein, dass der Fluidstrahl 234a der Druckluftdüse 232a im Bereich des freien Randes 210 der Halteleiste 198 auf das Umformerzeugnis auftrifft, so dass mit diesem Fluidstrahl 234a der freie Rand der Folie 102 von dem Umformerzeugnis 104 abgelöst wird.

Ferner kann vorgesehen sein, dass der Fluidstrahl 234d der Druckluftdüse 232d im Bereich des äußeren Randes 126 des Umformerzeugnisses 104 auf das Umformerzeugnis 104 auftrifft, so dass die Folie 102 in diesem Bereich von dem Umformerzeugnis 104 abgelöst wird.

Wie aus Fig. 8 zu ersehen ist, sind die Druckluftdüsen 232b und 232c vorzugsweise so ausgerichtet, dass die von ihnen erzeugten Fluidstrahlen 234b beziehungsweise 234c im Bereich zwischen dem freien Rand 210 der Halteleiste 198 und dem äußeren Rand 126 des Umformerzeugnisses 104 auf den Randbereich 124 des Umformerzeugnisses 104 auftreffen, so dass die Folie 102 in diesem Zwischenbereich von dem Umformerzeugnis 104 abgelöst wird.

In Fig. 9 sind aus Gründen der Übersichtlichkeit nur die Druckluftdüsen 232a und 232d der Ablöseeinheit 228 dargestellt.

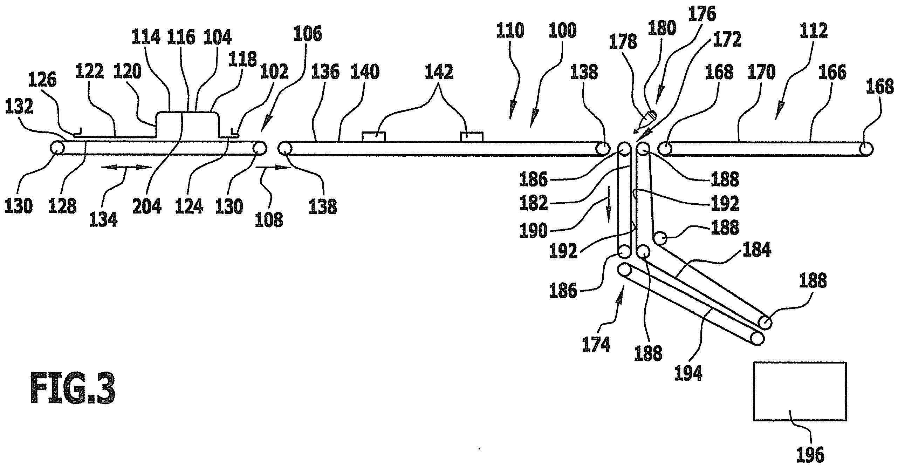

Mittels der vorstehend beschriebenen Ablösevorrichtung 100 wird ein Verfahren zum Ablösen der Folie 102 von dem Umformerzeugnis 104 wie folgt durchgeführt (siehe insbesondere die Fig. 3 bis 7):
Das mit der Folie 102 versehene Umformerzeugnis 104 wird in der Aufgabestation 106 auf die Auflagefläche 132 aufgelegt, und zwar mit der Sichtseite 204 nach unten, so dass der Randbereich der Folie 102 an der Rückseite des Umformerzeugnisses 104 einer Einwirkung durch die Einwirkungsvorrichtungen 146a und 146b zugängig ist (siehe Fig. 3).

Das Umformerzeugnis 104 wird mittels der Transportbänder 128 und 136 in der Förderrichtung 108 von der Aufgabestation 106 in die Ablösestation 110 transportiert und in einer Arbeitsposition mittels der Positionierelemente 142 zentriert und stillgesetzt.

Anschließend wird die Bewegungsvorrichtung 144 in Betrieb genommen, um die Einwirkungsvorrichtungen 146a und 146b, der Randkontur des Umformerzeugnisses 104 folgend, längs des Randbereiches 124 des Umformerzeugnisses 104 zu bewegen, wobei die Einwirkungsvorrichtungen 146a und 146b in Betrieb genommen werden, um auf die Folie 102 im Randbereich 124 des Umformerzeugnisses 104 einzuwirken.

Dabei wird die Folie 102 im Randbereich 124 des Umformerzeugnisses 104 mittels der als Anlöseeinheit 212 ausgebildeten ersten Einwirkungsvorrichtung 146a zunächst angelöst und anschließend mit der als Ablöseeinheit 228 wirkenden zweiten Einwirkungsvorrichtung 146b von dem Umformerzeugnis 104 abgelöst (siehe Fig. 4).

In Fig. 4 sind die erste Einwirkungsvorrichtung 146a und die zweite Einwirkungsvorrichtung 146b aus Darstellungsgründen an einander gegenüberliegenden Stirnseiten des Umformerzeugnisses 104 gezeigt; in der Regel wird aber der Abstand zwischen der ersten Einwirkungsvorrichtung 146a und der zweiten Einwirkungsvorrichtung 146b geringer sein.

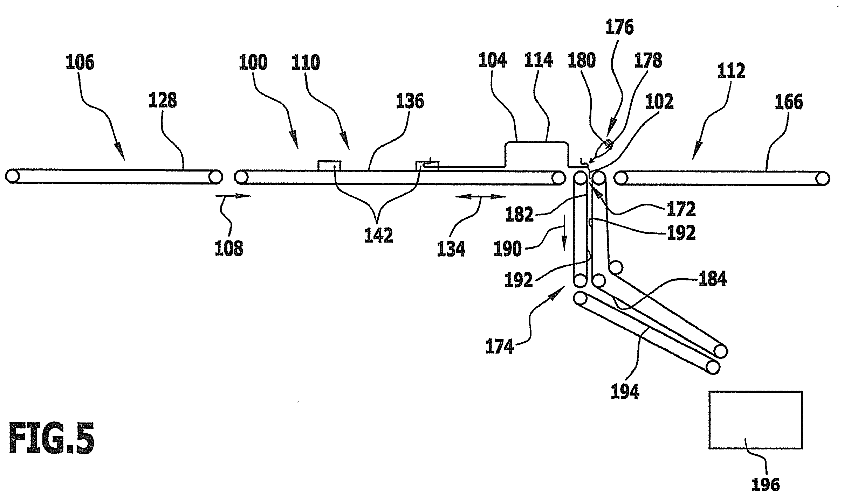

Nachdem die erste Einwirkungsvorrichtung 146a und die zweite Einwirkungsvorrichtung 146b auf den gesamten Randbereich 124 des Umformerzeugnisses 104 eingewirkt haben und die Folie 102 von diesem Randbereich 124 des Umformerzeugnisses 104 abgelöst worden ist, wird das Umformerzeugnis 104 mit der im Randbereich 124 abgelösten Folie 102 mittels der Transportbänder 136 in der Förderrichtung 108 aus der Ablösestation 110 herausbewegt, so dass die vordere Stirnseite des Umformerzeugnisses 104 in den Wirkungsbereich der Anblasvorrichtung 176 gelangt (siehe Fig. 5).

Die Anblasvorrichtung 176 bläst den von der Stirnseite des Randbereichs 124 des Umformerzeugnisses 104 abgelösten freien Rand der Folie 102 in den Eintrittsspalt 172 der Abziehvorrichtung 174.

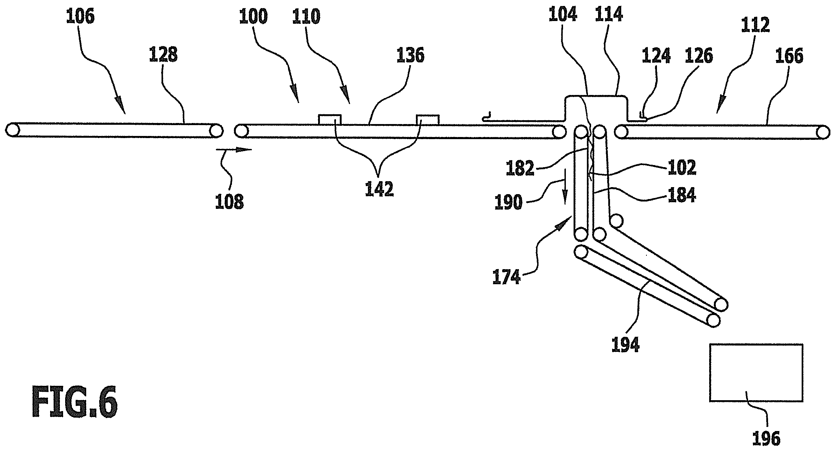

Nachdem dieser freie Rand der Folie 102 von den Abziehbändern 182 und 184 der Abziehvorrichtung 174 erfasst worden ist, wird die Folie 102 längs der Abziehrichtung 190 transportiert und dabei von dem gesamten Umformerzeugnis 104, insbesondere von der Sichtseite 204 des Umformerzeugnisses 104, abgezogen, während das Umformerzeugnis 104 mittels der Transportbänder 136 und 166 weiter in der Förderrichtung 108 von der Ablösestation 110 in die Entnahmestation 112 bewegt wird (siehe Fig. 6). Dabei ist die Anblasvorrichtung 176 aus dem Förderweg des Umformerzeugnisses 104 heraus (beispielsweise nach oben oder zur Seite hin) bewegbar.

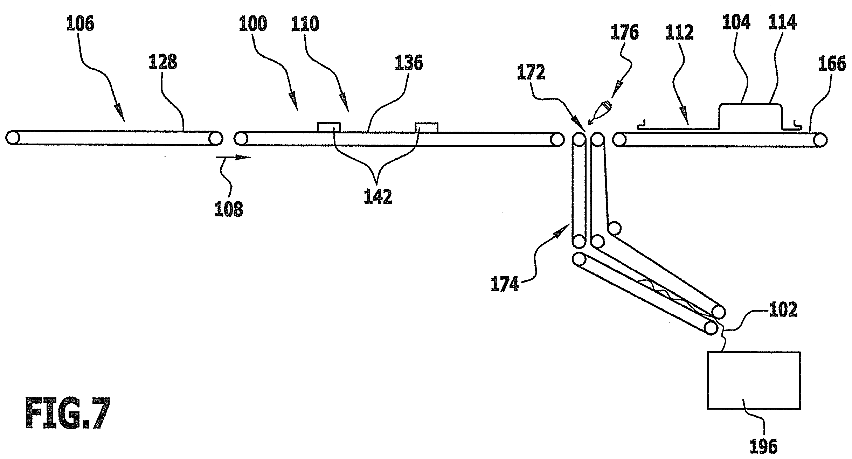

Schließlich befindet sich das vollständig von der Folie 102 befreite Umformerzeugnis 104 in einer Entnahmeposition in der Entnahmestation 112 (siehe Fig. 7).

Das Umformerzeugnis 104 kann nun aus der Entnahmestation 112 entnommen und weiterbearbeitet und/oder verpackt werden.

Die von dem Umformerzeugnis 104 abgezogene Folie 102 wird von der Abziehvorrichtung 174 in den Auffangbehälter 196 transportiert.

Aus dem Auffangbehälter 196 kann die Folie 102 später einer Wiederverwertung oder Entsorgung zugeführt werden.

Vorzugsweise erfolgt das gesamte Ablöseverfahren zwischen dem Einbringen des Umformerzeugnisses 104 in die Aufgabestation 106 und dem Entnehmen des Umformerzeugnisses 104 aus der Entnahmestation 112 automatisch.

Die Ablösevorrichtung 100 umfasst vorzugsweise eine (nicht dargestellte) Steuervorrichtung zur Steuerung der Transportbänder 128, 136 und 166, zur Steuerung der Bewegungsvorrichtung 144 und/oder zur Steuerung der Einwirkungsvorrichtung 146.

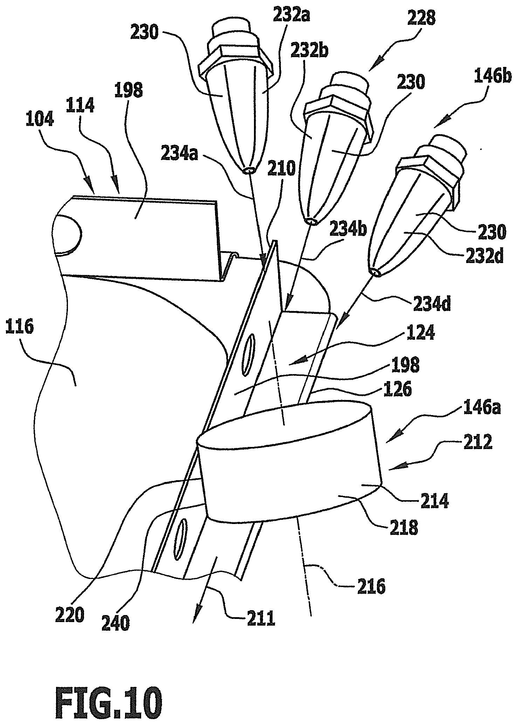

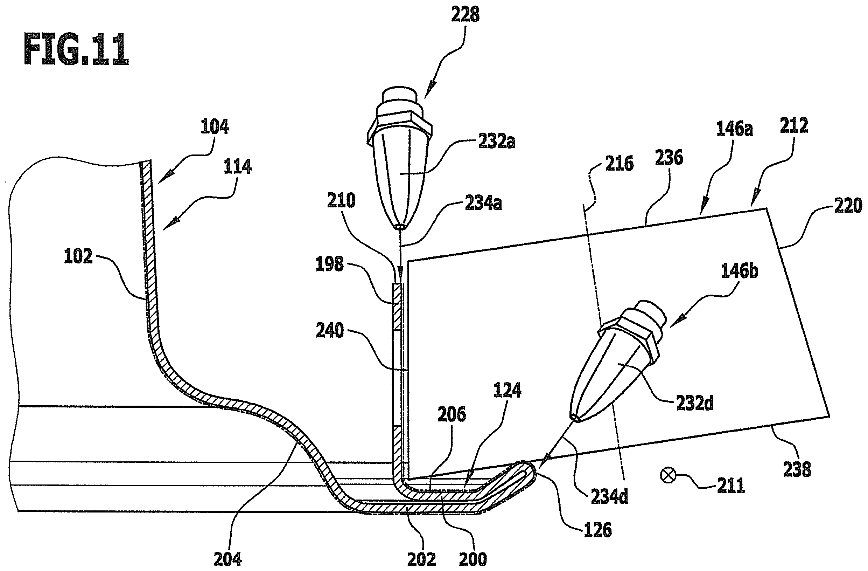

Eine in den Fig. 10 und 11 dargestellte zweite Ausführungsform einer Ablösevorrichtung 100 unterscheidet sich von der in den Fig. 1 bis 9 dargestellten ersten Ausführungsform durch die Ausgestaltung der Einwirkungsvorrichtungen 146a und 146b.

Insbesondere ist bei der als Anlöseeinheit 212 dienenden ersten Einwirkungsvorrichtung 146a bei dieser Ausführungsform die Rotationsachse 216 nicht nahezu horizontal, sondern vorzugsweise nahezu vertikal, insbesondere unter einem Winkel zur Vertikalen von weniger als ungefähr 20° geneigt, ausgerichtet.

Die Außenkontur 220 der Bürste 218 erweitert sich bei dieser Ausführungsform im Wesentlichen konisch von einem oberen Ende 236 der Bürste 218, welches im Betrieb der Ablösestation 110 dem äußeren Rand 126 des Umformerzeugnisses 104 abgewandt ist, längs der Rotationsachse 216 bis zu einem unteren Ende 238 der Bürste 218, welches im Betrieb der Ablösestation 110 dem äußeren Rand 126 des Umformerzeugnisses 104 zugewandt ist und im Bereich zwischen der Rotationsachse 216 und einem äußeren Rand der Bürste 218 in Kontakt mit dem äußeren Rand 126 des Umformerzeugnisses 104 kommt (siehe Fig. 11).

An ihrem Umfang 240 kann die Bürste 218 bei dieser Ausführungsform in Kontakt mit der Folie 102 kommen, welche an der Außenseite 208 der Halteleiste 198 angeordnet ist.

Ferner kann bei dieser Ausführungsform in der zweiten Einwirkungsvorrichtung 146b eine der Druckluftdüsen 232a bis 232d, beispielsweise eine der mittleren Druckluftdüsen 232b oder 232c, entfallen.

Die Druckluftdüsen 232a und 232d sind bei dieser Ausführungsform vorzugsweise genauso ausgerichtet, nämlich auf den freien Rand 210 der Halteleiste 198 beziehungsweise auf den äußeren Rand 126 des Umformerzeugnisses 104, wie bei der vorstehend beschriebenen ersten Ausführungsform.

In Fig. 11 sind aus Gründen der Übersichtlichkeit nur zwei der vorzugsweise drei Druckluftdüsen der zweiten Einwirkungsvorrichtung 146b dargestellt.

Im Übrigen stimmt die in den Fig. 10 und 11 dargestellte zweite Ausführungsform einer Ablösevorrichtung 100 hinsichtlich Aufbau und Funktionsweise mit der in den Fig. 1 bis 9 dargestellten ersten Ausführungsform überein, auf deren vorstehende Beschreibung insoweit Bezug genommen wird.

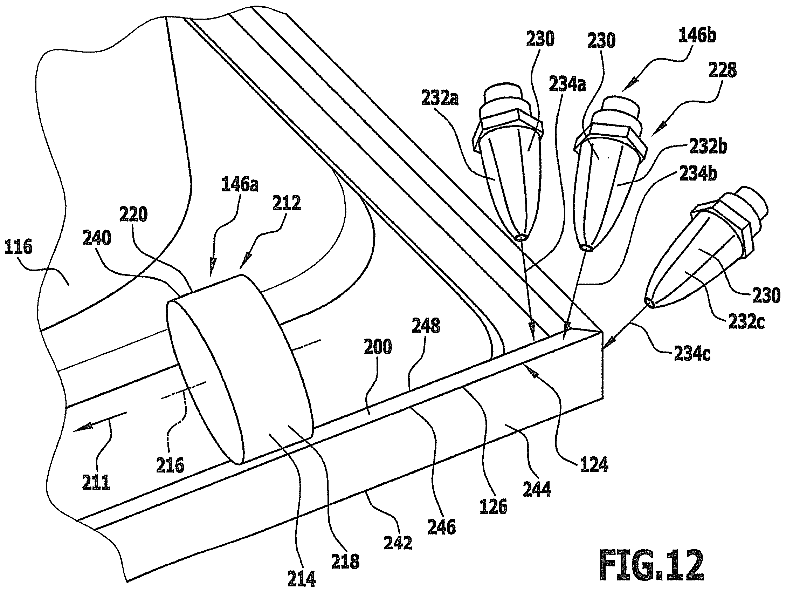

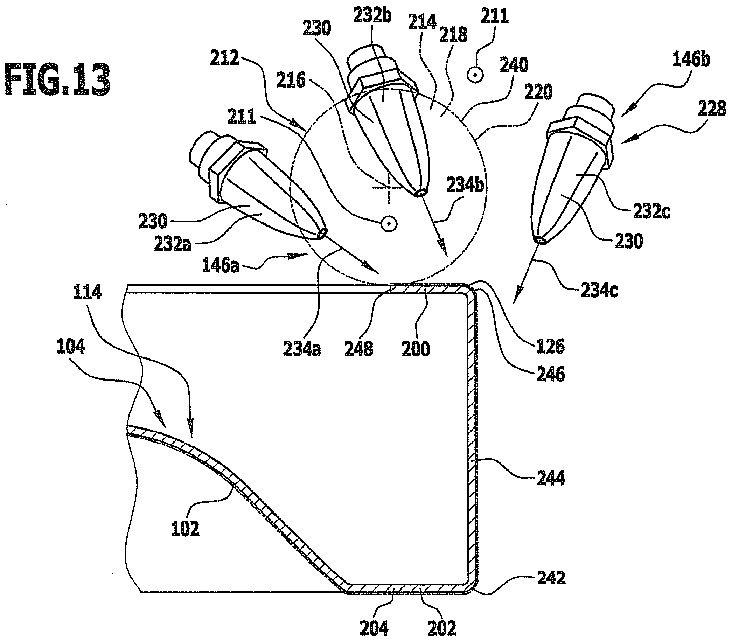

Eine in den Fig. 12 und 13 dargestellte dritte Ausführungsform einer Ablösevorrichtung 100 unterscheidet sich von der in den Fig. 1 bis 9 dargestellten ersten Ausführungsform hinsichtlich der Ausgestaltung der ersten Einwirkungsvorrichtung 146a und der zweiten Einwirkungsvorrichtung 146b.

Diese dritte Ausführungsform eignet sich insbesondere zum Abziehen der Folie 102 von einem Umformerzeugnis 104, welches einen zweifach abgekanteten Randbereich 124 aufweist, wie dies insbesondere aus Fig. 13 zu ersehen ist.

Bei einem solchen Umformerzeugnis 104, welches beispielsweise als eine Auflagespüle zum Auflegen auf einen Unterschrank ausgebildet ist, ist der sichtseitige Randbereich 202 längs einer Biegelinie 242 mit einem seitlichen Randbereich 244 verbunden.

Der seitliche Randbereich 244 ist längs einer weiteren Biegelinie 246 mit dem rückseitigen Randbereich 200 verbunden.

Der rückseitige Randbereich 200 endet an einem freien Rand 248.

Die Folie 102 bedeckt nach dem Umformvorgang des Umformerzeugnisses 104 dessen Sichtseite 204 einschließlich des sichtseitigen Randbereichs 202, den seitlichen Randbereich 244 und den rückseitigen Randbereich 200 bis zu dem freien Rand 248 desselben.

Die erste Einwirkungsvorrichtung 146a, die als Anlöseeinheit 212 ausgebildet ist, umfasst bei dieser Ausführungsform eine rotierende Bürste 218, deren Rotationsachse 216 vorzugsweise nicht im Wesentlichen senkrecht zur Vorschubrichtung 211 der Einwirkungsvorrichtungen 146 ausgerichtet ist, sondern vorzugsweise im Wesentlichen parallel zu der Vorschubrichtung 211 verläuft.

Wie am besten aus Fig. 13 zu ersehen ist, ist die, vorzugsweise im Wesentlichen zylindrische, Außenkontur 220 der Bürste 218 bei dieser Ausführungsform während des Ablösevorgangs in der Ablösestation 110 relativ zu dem Umformerzeugnis 104 so angeordnet, dass der rückseitige Randbereich 200 im Wesentlichen tangential zu dem Umfang 240 der Außenkontur 220 verläuft oder mit demselben in Eingriff steht.

Der Umfang 240 der Außenkontur 220 der Bürste 218 kommt im Bereich des freien Randes 248 des rückseitigen Randbereichs 200 des Umformerzeugnisses 104 in Kontakt mit der das Umformerzeugnis 104 bedeckenden Folie 102.

Die zweite Einwirkungsvorrichtung 146b umfasst bei dieser Ausführungsform mehrere, beispielsweise drei, Druckluftdüsen 232a bis 232c.

Dabei ist vorzugsweise die Druckluftdüse 232a so ausgerichtet, dass der von ihr erzeugte Fluidstrahl 234a im Bereich des freien Randes 248 des rückseitigen Randbereichs 200 auf das Umformerzeugnis 104 auftrifft.

Die Druckluftdüse 232b ist vorzugsweise so ausgerichtet, dass der von ihr erzeugte Fluidstrahl 234b im Bereich der Biegelinie 246 auf den Randbereich 124 des Umformerzeugnisses 104 auftrifft.

Die Druckluftdüse 232c ist vorzugsweise so ausgerichtet, dass der von ihr erzeugte Fluidstrahl 234c auf den seitlichen Randbereich 244 des Umformerzeugnisses 104 auftrifft.

Im Übrigen stimmt die in den Fig. 12 und 13 dargestellte dritte Ausführungsform einer Ablösevorrichtung 100 hinsichtlich Aufbau und Funktionsweise mit der in den Fig. 1 bis 9 dargestellten ersten Ausführungsform überein, auf deren vorstehende Beschreibung insoweit Bezug genommen wird.

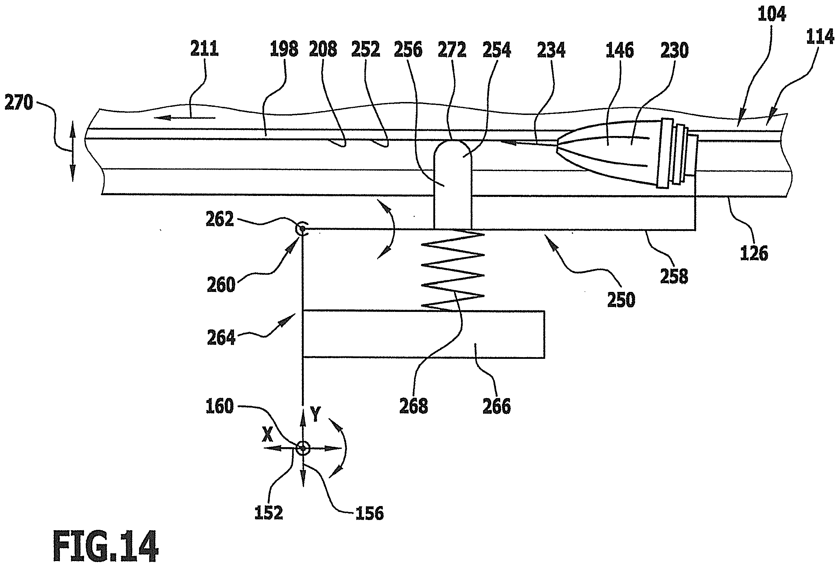

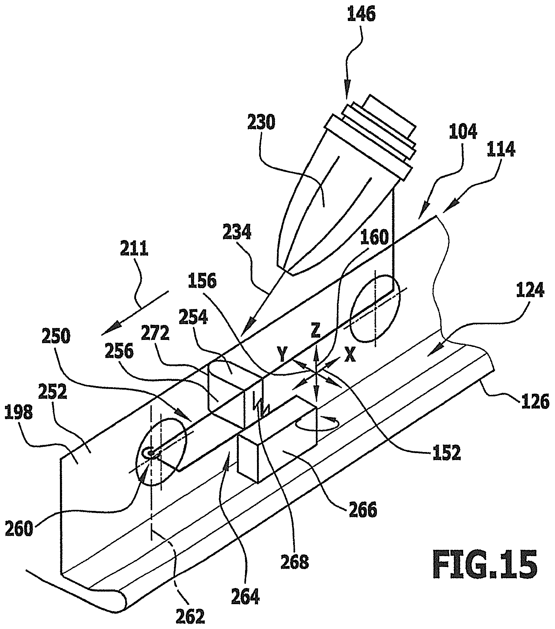

Eine in den Fig. 14 und 15 dargestellte vierte Ausführungsform einer Ablösevorrichtung 100 unterscheidet sich von den vorstehend beschriebenen Ausführungsformen dadurch, dass mindestens eine Einwirkungsvorrichtung 146 der Ablösevorrichtung 100 mittels einer Führungseinrichtung 250 an einer Führungskontur 252 des Umformerzeugnisses 104 geführt ist.

In dem dargestellten Ausführungsbeispiel ist die Einwirkungsvorrichtung 146 beispielhaft als eine Ablöseeinheit 228 dargestellt, welche eine Fluidstrahlerzeugungsvorrichtung 230 zur Erzeugung eines Fluidstrahls 234 umfasst.

Grundsätzlich kann aber jede beliebige Einwirkungsvorrichtung 146, insbesondere jede der vorstehend beschriebenen Einwirkungsvorrichtungen 146a und 146b, mit einer solchen Führungseinrichtung 250 versehen sein.

Wie aus den Fig. 14 und 15 zu ersehen ist, umfasst die Führungseinrichtung 250 ein Führungselement 254, beispielsweise in Form eines Führungsstiftes 256, welches an einem Schwenkelement 258 angeordnet ist.

Das Schwenkelement 258 trägt die jeweilige Einwirkungsvorrichtung 146, also beispielsweise eine oder mehrere Fluidstrahlerzeugungsvorrichtungen 230.

Das Schwenkelement 258 ist mittels eines Schwenkgelenks 260 um eine Schwenkachse 262 schwenkbar an einer Halterung 264 gelagert.

Die Halterung 264 ist mittels der Bewegungsvorrichtung 144 bewegbar, beispielsweise linear bewegbar in der X-Richtung 152, der Y-Richtung 156 und der Z-Richtung 160 sowie vorzugsweise um die Z-Achse 164 drehbar.

Die Schwenkachse 262 ist vorzugsweise im Wesentlichen parallel zur Z-Achse 164 der Bewegungsvorrichtung 144 ausgerichtet.

Ferner ist die Schwenkachse 262 vorzugsweise im Wesentlichen senkrecht zur Vorschubrichtung 211 und vorzugsweise im Wesentlichen vertikal ausgerichtet.

Die Halterung 264 umfasst ein Abstützelement 266, an welchem sich ein Vorspannelement 268 mit einem ersten Ende abstützt.

Mit seinem dem ersten Ende abgewandten zweiten Ende stützt sich das Vorspannelement 268 an dem Schwenkelement 258 ab, und zwar derart, dass das Vorspannelement 268 im Betrieb der Einwirkungsvorrichtung 146 das Führungselement 254 gegen die Führungskontur 252 des Umformerzeugnisses 104 vorspannt.

Das Vorspannelement 268 ist vorzugsweise elastisch verformbar ausgebildet.

Beispielsweise kann das Vorspannelement 268 als ein Federelement, insbesondere als eine Druckfeder, ausgebildet sein.

Die Führungskontur 252 des Umformerzeugnisses 104 kann beispielsweise die Außenseite 208 einer Halteleiste 198 des Umformerzeugnisses 104 sein.

Wenn die Führungskontur 252 in einer Querrichtung 270, welche vorzugsweise senkrecht zur Vorschubrichtung 211 und senkrecht zu der Schwenkachse 262 ausgerichtet ist, von der Vorschubrichtung 211 abweicht, so folgen das Führungselement 254, das Schwenkelement 258 und damit auch die Einwirkungsvorrichtung 146 der Führungskontur 252 in der Querrichtung 270, so dass die Einwirkungsvorrichtung 146 stets dieselbe Relativpositionierung und Ausrichtung relativ zu der Führungskontur 252 des Umformerzeugnisses 104 beibehält.

Beispielsweise kann auf diese Weise erreicht werden, dass ein von der Fluidstrahlerzeugungsvorrichtung 230 erzeugter Fluidstrahl 234 stets auf den freien Rand 210 der Halteleiste 198 gerichtet bleibt, auch wenn die Halteleiste 198 nicht exakt parallel zum äußeren Rand 126 des Umformerzeugnisses 104 und/oder nicht exakt parallel zur Vorschubrichtung 211 der Einwirkungsvorrichtung 146 verläuft.

Das Führungselement 254 kann mit einer gerundeten Führungsspitze 272 versehen sein, welche im Betrieb der Führungseinrichtung 250 an der Führungskontur 252 anliegt.

Im Übrigen stimmt die in den Fig. 14 und 15 dargestellte vierte Ausführungsform der Ablösevorrichtung 100 hinsichtlich Aufbau und Funktionsweise mit den in den Fig. 1 bis 13 dargestellten Ausführungsformen überein, auf deren vorstehende Beschreibung insoweit Bezug genommen wird.

## Patentansprüche

1. Vorrichtung zum zumindest teilweisen Ablösen einer Folie (102) von einem Umformerzeugnis (104),
wobei die Vorrichtung (100) mindestens eine Einwirkungsvorrichtung (146) zum Anlösen und/oder Ablösen der Folie (102) und mindestens eine Bewegungsvorrichtung (144) zum Bewegen der Einwirkungsvorrichtung (146) relativ zu dem Umformerzeugnis (104) und/oder zum Bewegen des Umformerzeugnisses (104) relativ zu der Einwirkungsvorrichtung (146) umfasst,
**dadurch gekennzeichnet,**
**dass** mindestens eine Einwirkungsvorrichtung (146)
a) ein schwingendes und/oder rotierendes Kontaktanlöseelement (214) in Form einer Bürste (218) umfasst, das durch mechanischen Kontakt mit der Folie (102) ein Anlösen der Folie (102) bewirkt,
und/oder
b) zwei oder mehr Fluidstrahlerzeugungsvorrichtungen (230) umfasst, wobei die Fluidstrahlen, die von den Fluidstrahlerzeugungsvorrichtungen (230) erzeugt werden, zeitlich nacheinander auf einen Abschnitt des Umformerzeugnisses (104) einwirken und wobei die Vorrichtung (100) eine Abziehvorrichtung (174) zum Abziehen der abgelösten Folie (102) von dem Umformerzeugnis (104) umfasst.

2. Vorrichtung nach der Alternative a) von Anspruch 1, **dadurch gekennzeichnet, dass** die Vorrichtung (100) eine Abziehvorrichtung (174) zum Abziehen der abgelösten Folie (102) von dem Umformerzeugnis (104) umfasst.

3. Vorrichtung nach der Alternative b) von Anspruch 1 oder nach Anspruch 2, **dadurch gekennzeichnet, dass** die Abziehvorrichtung (174) mindestens ein Abziehband (182, 184) umfasst.

4. Vorrichtung nach einem der Ansprüche 1 bis 3, **dadurch gekennzeichnet, dass** die Einwirkungsbereiche von mindestens zwei Fluidstrahlerzeugungsvorrichtungen (230) relativ zueinander versetzt angeordnet sind.

5. Vorrichtung nach einem der Ansprüche 1 bis 4, **dadurch gekennzeichnet, dass** die Vorrichtung (100) eine erste Einwirkungsvorrichtung (146a) und eine zweite Einwirkungsvorrichtung (146b) umfasst, welche im Betrieb der Vorrichtung (100) nacheinander auf denselben Abschnitt eines Randbereichs (124) des Umformerzeugnisses (104) einwirken.

6. Vorrichtung nach Anspruch 5, **dadurch gekennzeichnet, dass** die erste Einwirkungsvorrichtung (146a) ein schwingendes und/oder rotierendes Kontaktanlöseelement (214) umfasst und die zweite Einwirkungsvorrichtung (146b) mindestens eine Fluidstrahlerzeugungsvorrichtung (178) umfasst.

7. Vorrichtung nach einem der Ansprüche 5 oder 6, **dadurch gekennzeichnet, dass** die Vorrichtung (100) eine Bewegungsvorrichtung (144) umfasst, mittels welcher die erste Einwirkungsvorrichtung (146a) und die zweite Einwirkungsvorrichtung (146b) in einem vorgegebenen Abstand voneinander relativ zu dem Umformerzeugnis (104) bewegbar sind.

8. Vorrichtung nach einem der Ansprüche 1 bis 7, **dadurch gekennzeichnet, dass** die Vorrichtung (100) eine Führungseinrichtung (250) zum Führen einer Einwirkungsvorrichtung (146) an einer Führungskontur (252) des Umformerzeugnisses (104) umfasst.

9. Vorrichtung nach Anspruch 8, **dadurch gekennzeichnet, dass** die Führungseinrichtung (250) ein Führungselement (254) und ein Vorspannelement (268) zum Vorspannen des Führungselements (254) gegen die Führungskontur (252) umfasst.

10. Vorrichtung nach einem der Ansprüche 1 bis 9, **dadurch gekennzeichnet, dass** die Einwirkungsvorrichtung (146) mittels der Bewegungsvorrichtung (144) so relativ zu dem Umformerzeugnis (104) bewegbar ist, dass die Einwirkungsvorrichtung (146) längs im Wesentlichen der gesamten Länge eines umlaufenden Randbereichs (124) des Umformerzeugnisses (104) auf die an dem Umformerzeugnis (104) angeordnete Folie (102) einwirkt.

11. Vorrichtung nach einem der Ansprüche 1 bis 10, **dadurch gekennzeichnet, dass** die Einwirkungsvorrichtung (146) mittels der Bewegungsvorrichtung (144) längs dreier Freiheitsgrade linear relativ zu dem Umformerzeugnis (104) bewegbar ist.

12. Verfahren zum zumindest teilweisen Ablösen einer Folie (102) von einem Umformerzeugnis (104), umfassend Folgendes:
- Bewegen mindestens einer Einwirkungsvorrichtung (146) zum Anlösen und/oder Ablösen der Folie (102) relativ zu dem Umformerzeugnis (104) und/oder Bewegen des Umformerzeugnisses (104) relativ zu mindestens einer Einwirkungsvorrichtung (146) zum Anlösen und/oder Ablösen der Folie (102) mittels mindestens einer Bewegungsvorrichtung (144);
- zumindest teilweises Anlösen und/oder Ablösen der Folie (102) mittels der mindestens einen Einwirkungsvorrichtung (146);
wobei mindestens eine Einwirkungsvorrichtung (146)
a) ein schwingendes und/oder rotierendes Kontaktanlöseelement (214) in Form einer Bürste (218) umfasst, das durch mechanischen Kontakt mit der Folie (102) ein Anlösen der Folie (102) bewirkt,
und/oder
b) zwei oder mehr Fluidstrahlerzeugungsvorrichtungen (230) umfasst, wobei die Fluidstrahlen, die von den Fluidstrahlerzeugungsvorrichtungen (230) erzeugt werden, zeitlich nacheinander auf einen Abschnitt des Umformerzeugnisses (104) einwirken und wobei die abgelöste Folie (102) mittels einer Abziehvorrichtung (174) von dem Umformerzeugnis (104) abgezogen wird.

13. Verfahren nach Anspruch 12, **dadurch gekennzeichnet, dass** das Umformerzeugnis (104) einen umlaufenden Randbereich (124) aufweist und dass die mindestens eine Einwirkungsvorrichtung (146) längs im Wesentlichen der gesamten Länge des Randbereichs (124) auf die an dem Umformerzeugnis (104) angeordnete Folie (102) einwirkt.

14. Verfahren nach einem der Ansprüche 12 oder 13, **dadurch gekennzeichnet, dass** die Einwirkungsvorrichtung (146) mittels der Bewegungsvorrichtung (144) längs dreier Freiheitsgrade linear relativ zu dem Umformerzeugnis (104) bewegt wird.

## Claims

1. A device for at least partly detaching a film (102) from a formed product (104),
wherein the device (100) includes at least one action device (146) for loosening and/or for detaching the film (102) and at least one movement device (144) for moving the action device (146) in relation to the formed product (104) and/or for moving the formed product (104) in relation to the action device (146), **characterised in that**
at least one action device (146)
a) includes an oscillating and/or rotating contact element (214) for loosening, which is in the form of a brush (218) and uses mechanical contact with the film (102) to loosen the film (102),
and/or
b) includes two or more fluid jet producing devices (230), wherein the fluid jets that are produced by the fluid jet producing devices (230) act on a portion of the formed product (104) in temporal succession, and wherein the device (100) includes a pull-off device (174) for pulling the detached film (102) off the formed product (104).

2. A device according to the alternative a) of Claim 1, **characterised in that** the device (100) includes a pull-off device (174) for pulling the detached film (102) off the formed product (104).

3. A device according to the alternative b) of Claim 1 or according to Claim 2, **characterised in that** the pull-off device (174) includes at least one pull-off belt (182, 184).

4. A device according to one of Claims 1 to 3, **characterised in that** the action regions of at least two fluid jet producing devices (230) are arranged offset in relation to one another.

5. A device according to one of Claims 1 to 4, **characterised in that** the device (100) includes a first action device (146a) and a second action device (146b) which, during operation of the device (100), act successively on the same portion of an edge region (124) of the formed product (104).

6. A device according to Claim 5, **characterised in that** the first action device (146a) includes an oscillating and/or rotating contact element (214) for loosening, and the second action device (146b) includes at least one fluid jet producing device (178).

7. A device according to one of Claims 5 or 6, **characterised in that** the device (100) includes a movement device (144) by means of which the first action device (146a) and the second action device (146b) are movable at a predetermined spacing from one another in relation to the formed product (104).

8. A device according to one of Claims 1 to 7, **characterised in that** the device (100) includes a guide device (250) for guiding an action device (146) along a guide contour (252) of the formed product (104).

9. A device according to Claim 8, **characterised in that** the guide device (250) includes a guide element (254) and a bias element (268) for biasing the guide element (254) against the guide contour (252).

10. A device according to one of Claims 1 to 9, **characterised in that** the action device (146) is movable by the movement device (144) in relation to the formed product (104) such that the action device (146) acts on the film (102) that is arranged on the formed product (104) along substantially the entire length of a peripheral edge region (124) of the formed product (104).

11. A device according to one of Claims 1 to 10, **characterised in that** the action device (146) is movable by the movement device (144) in three degrees of freedom linearly in relation to the formed product (104).

12. A method for at least partly detaching a film (102) from a formed product (104), including the following:
- moving at least one action device (146) for loosening and/or for detaching the film (102) in relation to the formed product (104) and/or moving the formed product (104) in relation to at least one action device (146) for loosening and/or detaching the film (102) by at least one movement device (144);
- at least partly loosening and/or detaching the film (102) by the at least one action device (146);
wherein at least one action device (146)
a) includes an oscillating and/or rotating contact element (214) for loosening, which is in the form of a brush (218) and uses mechanical contact with the film (102) to loosen the film (102),
and/or
b) includes two or more fluid jet producing devices (230), wherein the fluid jets that are produced by the fluid jet producing devices (230) act on a portion of the formed product (104) in temporal succession, and wherein the detached film (102) is pulled off the formed product (104) by a pull-off device (174).

13. A method according to Claim 12, **characterised in that** the formed product (104) has a peripheral edge region (124), and **in that** the at least one action device (146) acts on the film (102) that is arranged on the formed product (104) along substantially the entire length of the edge region (124).

14. A method according to one of Claims 12 or 13, **characterised in that** the action device (146) is moved by the movement device (144) in three degrees of freedom linearly in relation to the formed product (104).

## Revendications

1. Dispositif pour le détachement du moins partiel d'un film (102) d'un produit de formage (104),
le dispositif (100) comprenant au moins un dispositif d'action (146) pour le relâchement et/ou le détachement du film (102) et au moins un dispositif de déplacement (144) pour le déplacement du dispositif d'action (146) par rapport au produit de formage (104) et/ou pour déplacer le produit de formage (104) par rapport au dispositif d'action (146),
**caractérisé en ce que**
le au moins un dispositif d'action (146)
a) comprend un élément de relâchement par contact (214) oscillant et/ou rotatif en forme de brosse (218) qui, grâce au contact mécanique avec le film (102) provoque un relâchement du film (102),
et/ou
b) comprend au minimum deux dispositifs de production de jets de fluide, les jets de fluide étant produits par des dispositifs de production de jets de fluide (230), agissant chronologiquement l'un après l'autre sur un tronçon du produit de formage (104) et le dispositif (100) comprenant un dispositif de pelage (174) pour le pelage du film (102) détaché du produit de formage (104).

2. Dispositif selon l'alternative a) de la revendication 1, **caractérisé en ce que** le dispositif (100) comprend un dispositif de pelage (174) pour le pelage du film détaché (102) du produit de formage (104).

3. Dispositif selon l'alternative b) de la revendication 1 ou selon la revendication 2, **caractérisé en ce que** le dispositif de pelage (174) comprend au moins une bande de pelage (182, 184).

4. Dispositif selon l'une quelconque des revendications 1 à 3, **caractérisé en ce que** les zones d'action d'au moins deux dispositifs de production de jets de fluide (230) sont décalés l'un par rapport à l'autre.

5. Dispositif selon l'une quelconque des revendications 1 à 4, **caractérisé en ce que** le dispositif (100) comprend un premier dispositif d'action (146a) et un deuxième dispositif d'action (146b), lesquels agissent successivement, lorsque le dispositif (100) est en service, sur le même tronçon d'une zone marginale (124) du produit de formage (104).

6. Dispositif selon la revendication 5, **caractérisé en ce que** le premier dispositif d'action (146a) comprend un élément de relâchement par contact oscillant et/ou rotatif (214) et le deuxième dispositif d'action (146b) au moins un dispositif de production de jets de fluide (178).

7. Dispositif selon l'une quelconque des revendications 5 ou 6, **caractérisé en ce que** le dispositif (100) comprend un dispositif de déplacement (144) au moyen duquel le premier dispositif d'action (146a) et le deuxième dispositif d'action (146b) sont déplaçables par rapport au produit de formage (104) à une distance prédéfinie l'un de l'autre.

8. Dispositif selon l'une quelconque des revendications 1 à 7, **caractérisé en ce que** le dispositif (100) comprend un dispositif de guidage (250) pour guider un dispositif d'action (146) sur un contour de guidage (252) du produit de formage (104).

9. Dispositif selon la revendication 8, **caractérisé en ce que** le dispositif de guidage (250) comprend un élément de guidage (254) et un élément de précontrainte (268) pour la précontrainte de l'élément de guidage (254) contre le contour de guidage (252).

10. Dispositif selon l'une quelconque des revendications 1 à 9, **caractérisé en ce que** le dispositif d'action (146) peut être déplacé par rapport au produit de formage (104) au moyen du dispositif de déplacement (144), **en ce que** le dispositif d'action (146) agit essentiellement le long de la longueur totale d'une zone marginale (124) périphérique du produit de formage (104) sur le film (102) disposé contre le produit de formage (104).

11. Dispositif selon l'une quelconque des revendications 1 à 10, **caractérisé en ce que** le dispositif d'action (146) peut être déplacé le long de trois degrés de liberté de façon linéaire par rapport au produit de formage (104) au moyen du dispositif de déplacement (144).

12. Procédé pour le détachement du moins partiel d'un film (102) d'un produit de formage (104) comprenant les étapes suivantes
- déplacement d'au moins un dispositif d'action (146) pour le relâchement et/ou le détachement du film (102) par rapport au produit de formage (104) et/ou déplacement du produit de formage (104) par rapport à au moins un dispositif d'action (146) pour le relâchement ou le détachement du film (102) au moyen d'au moins un dispositif de déplacement (144) ;
- relâchement et/ou détachement au moins partiels du film (102) au moyen de l'au moins un dispositif d'action (146) ;
dans lequel au moins un dispositif d'action (146)
a) comprend un élément de relâchement par contact (214) oscillant et/ou rotatif en forme de brosse (218) qui, grâce au contact mécanique avec le film (102), provoque un relâchement du film (102),
et/ou
b) comprend au minimum deux dispositifs de production de jets de fluide (230), les jets de fluide étant produits par des dispositifs de production de jets de fluide (230), agissant chronologiquement l'un après l'autre sur un tronçon du produit de formage (104) et le film détaché (102) étant pelé du produit de formage (104) au moyen d'un dispositif de pelage (104).

13. Procédé selon la revendication 12, **caractérisé en ce que** le produit de formage (104) présente une zone marginale (124) périphérique et **en ce que** l'au moins un dispositif d'action (146) agit essentiellement le long de la longueur totale de la zone marginale (124) sur le film (102) disposé contre le produit de formage (104).

14. Procédé selon l'une quelconque des revendications 12 ou 13, **caractérisé en ce que** le dispositif d'action (146) peut être déplacé le long de trois degrés de liberté de façon linéaire par rapport au produit de formage (104) au moyen du dispositif de déplacement (144).
